# EUROPEAN PATENT APPLICATION

(11) **EP 4 060 584 A1**
(43) Date of publication of application: **21.09.2022**
(21) Application number: 20886407.4
(22) Date of filing: 10.11.2020
(51) Int. Cl.: G06Q 20/10, G06Q 40/02

(54) **CASH RECEIVING SYSTEM AND CASH RECEIVING METHOD**

(30) Priority: 13.11.2019 JP 2019205484
(71) Applicant: GLORY LTD., Himeji-shi Hyogo 670-8567 (JP); Socash Pte. Ltd., 528785 Singapore (SG)
(72) Inventor: HIGASHIYAMA, Minoru, Hyogo 670-8567 (JP); FUKUNISHI, Yuta, Hyogo 670-8567 (JP); SIVAN Hari Palaparambil, Singapore 528785 (SG)
(74) Representative: SSM Sandmair
(86) International application number: PCT/JP2020/041820
(87) International publication number: WO 2021/095706

(57) **Abstract**

A cash receiving system includes: a cash handling apparatus installed in each store; a store server configured to manage cash stored in the cash handling apparatus; a mobile terminal configured to input information on the cash to be withdrawn from the account of the user; a management server configured to receive the information from the mobile terminal, and transmit to the mobile terminal information on a store to receive the cash; and a financial institution server configured to receive information on the cash, and perform account handling for transferring an amount of the cash from the account of the user to an account of the store. When the store server has determined that the store has cash to be deposited into the account of the store, the management server notifies the user of information on the determination result.

## Description

### TECHNICAL FIELD

The present disclosure relates to a cash receiving system and a cash receiving method that allow a user to receive, at a store, cash withdrawn from an account at a financial institution.

### BACKGROUND ART

Conventionally, a system that allows a customer of a financial institution to receive, at a store, cash withdrawn from an account, has been used. Patent Literature 1 discloses a system that allows a customer of a store to dispense cash from an ATM (Automated Teller Machine) by using a POS (Point of Sale) terminal. In this system, the POS terminal receives information on the cash withdrawn from the account of the customer. The ATM installed in the store can dispense the cash withdrawn from the account of the customer, based on the information received by the POS terminal, as in the case where the customer inputs the information by operating the ATM.

In the case where ATMs installed in stores are used for cash dispensing, convenience of system users who want to dispense cash is improved as the number of stores equipped with ATMs is increased. However, burden on the financial institution and the stores that install and manage the ATMs is increased. Therefore, a system that allows a user to dispense cash withdrawn from an account at a financial institution, from a cash handling apparatus other than an ATM, has been proposed.

Patent Literature 2 discloses a system that allows a user to dispense cash from settlement machines installed in various facilities. The user inputs, in a mobile terminal, an amount of cash to be withdrawn from an account at a bank. The user goes to a facility entrusted by the bank, and dispenses the cash withdrawn from the account, from a settlement machine installed in the facility.

Meanwhile, Patent Literatures 3 and 4 each disclose a system that allows a customer of a store to dispense cash from a change machine. When information on cash to be withdrawn from an account of the customer is inputted to a POS terminal, the change machine connected to the POS terminal dispenses the cash withdrawn from the account.

If the customer who visits the store to receive the cash withdrawn from the account does some shopping at the store, the shopping results in a profit for the store. In order to increase the number of visiting customers, the store utilizes points, for example. Patent Literature 5 discloses a system that gives points to a customer who has received the withdrawn cash at a store. When purchasing items at the store, the customer can use cash changed from the points for payment of the items.

### CITATION LIST

### [PATENT LITERATURE]

[PTL 1] Japanese Laid-Open Patent Publication No. 2002-279494
[PTL 2] Japanese Laid-Open Patent Publication No. 2019-36169
[PTL 3] Japanese Laid-Open Patent Publication No. 2011-76298
[PTL 4] WO2019/107214
[PTL 5] Japanese Laid-Open Patent Publication No. 2003-58955

### SUMMARY OF THE INVENTION

### PROBLEMS TO BE SOLVED BY THE INVENTION

In the systems according to the conventional arts, however, the advantage for the store is less than the advantages for the financial institution and the user. The financial institution can provide the user who has an account at the financial institution with a cash withdrawal service in the store where no ATM is installed. The user can receive the cash withdrawn from his/her account in the store where no ATM is installed. Moreover, if the store offers points, the user can get the points when the user withdraws the cash at the store. Meanwhile, the store cannot make a profit unless the user purchases an item at the store even though the store passes cash to the user on behalf of the financial institution and offers points to the user.

The present disclosure has been made in view of the conventional arts including the above problem, and one object of the present disclosure is to provide a cash receiving system and a cash receiving method that offer more advantages to a store that passes to a user cash that is withdrawn from an account at a financial institution and dispensed at the store.

### SOLUTION TO THE PROBLEMS

A cash receiving system according to the present disclosure is a system for a user to withdraw cash from an account at a financial institution and receive the cash at a store. The system includes: a cash handling apparatus installed in each of a plurality of stores; a store server configured to manage cash stored in the cash handling apparatus; a mobile terminal for the user to input information on the cash to be withdrawn from the account; a management server configured to receive the information inputted to the mobile terminal, and transmit to the mobile terminal, information on a store at which the user can receive the cash; and a server, of the financial institution, configured to receive information on the cash that the user has received from the cash handling apparatus of the store, and perform account handling for transferring an amount of the cash from the account of the user to an account of the store. The store server determines whether or not there is cash to be deposited into the account of the store, based on an inventory quantity of cash in the cash handling apparatus. When the store server has determined that there is cash to be deposited into the account of the store, the management server notifies the user of information based on a result of the determination.

In the above configuration, the management server may select a store at which the user can receive the cash, from among stores, the store servers of which have determined that there is cash to be deposited into the accounts of the stores.

In the above configuration, when the amount of the cash stored in the cash handling apparatus of the store exceeds an amount that is set in advance by the store, the store server may determine that there is cash to be deposited into the account of the store.

In the above configuration, when a timing that is set in advance by the store has come, the store server may determine that there is cash to be deposited into the account of the store.

In the above configuration, when the store server has received a predetermined manual operation performed by a clerk of the store, the store server may determine that there is cash to be deposited into the account of the store.

In the above configuration, the cash receiving system may further includes a display device installed in the store. When the store server has determined that there is cash to be deposited into the account of the store, the store server may display, on the display device, incentive information that gives the user an incentive to dispense cash.

In the above configuration, when it has been determined that there is cash to be deposited into the account of the store, the management server may transmit to the mobile terminal, incentive information that gives the user an incentive to dispense cash.

In the above configuration, the incentive information may include information on a benefit that is given from the store to the user when the user has received, at the store, the cash withdrawn from the account.

In the above configuration, the benefit may be a point that is available for payment of a price at settlement of a transaction performed in the store.

In the above configuration, in the account handling in a case where the account of the user and the account of the store at which the user has received the cash are at a first financial institution, the server of the first financial institution may transfer the amount of the cash from the account of the user to an account of a management company, and transfer the amount of the cash from the account of the management company to the account of the store. In the account handling in a case where the account of the user is at the first financial institution and the account of the store is at a second financial institution, the server of the first financial institution may transfer the amount of the cash from the account of the user to the account of the management company at the first financial institution, and the server of the second financial institution may transfer the amount of the cash from the account of the management company at the second financial institution to the account of the store.

In the above configuration, in the account handling in a case where the account of the user is at the first financial institution and the account of the store is at the second financial institution, the server of the first financial institution may perform a transfer process to transfer the amount of the cash from the account of the management company at the first financial institution to the account of the management company at the second financial institution.

In the above configuration, the management server may manage information on each transaction in which a user has received cash at a store. In the transfer process, amounts to be transferred from the account of the first financial institution to the account of the second financial institution for a plurality of transactions may be transferred by one transfer of an amount obtained by summing up the amounts based on the information managed by the management server.

In the above configuration, the management server may manage information on each transaction in which a user has received cash at a store. In the transfer process an amount to be transferred from the account of the first financial institution to the account of the second financial institution and an amount to be transferred from the account of the second financial institution to the account of the first financial institution may be transferred by one transfer of an amount corresponding to a difference obtained by offsetting these amounts based on the information managed by the management server.

In the above configuration, the number of times the transfer process is performed in a day may be set for each store.

In the above configuration, the number of times the transfer process is performed in a day may be changed according to a condition that is set in advance.

In the above configuration, in the account handling, a commission to be paid from the financial institution to the management company is deposited into the account of the management company, and a commission to be paid from the management company to the store is transferred from the account of the management company to the account of the store.

In the above configuration, the commission to be paid from the financial institution to the management company may be set for each financial institution, and the commission to be paid from the management company to the store may be set for each store.

In the above configuration, the commission to be paid from the financial institution to the management company and the commission to be paid from the management company to the store may be changed according to conditions that are set in advance.

In the above configuration, the cash handling apparatus may perform depositing of payment and dispensing of change at settlement of a transaction performed at a checkout counter.

In the above configuration, the checkout counter may be a self-checkout counter.

In the above configuration, the checkout counter may be a semi-self-checkout counter.

A cash receiving method according to the present disclosure is a method for a user to withdraw cash from an account at a financial institution and receive the cash at a store. The method includes: determining by a store server whether or not there is cash to be deposited into an account of the store, based on an inventory quantity of cash in a cash handling apparatus installed in the store; notifying, from a management server to the user, of information based on a result of determination, when the store server has determined that there is cash to be deposited into the account of the store; receiving to a mobile terminal, information on the cash that the user withdraws from the account; by the management server, receiving information inputted to the mobile terminal, and transmitting to the mobile terminal, information on a store at which the user can receive the cash; dispensing from the cash handling apparatus installed in the store, the cash to be received by the user; and receiving to a server of the financial institution, information on the cash that the user has received at the store, and performing by the server of the financial institution, account handling for transferring an amount of the cash from the account of the user to the account of the store.

### ADVANTAGEOUS EFFECTS OF THE INVENTION

The cash receiving system and the cash receiving method according the present disclosure offer advantages not only to a customer who wants to withdraw cash from an account at a financial institution and the financial institution that provides the customer with a cash withdrawal service, but also to a store where the customer receives the cash withdrawn from the account.

### BRIEF DESCRIPTION OF THE DRAWINGS

[FIG. 1] FIG. 1 is a block diagram showing a configuration of a cash receiving system according to an embodiment of the present disclosure.
[FIG. 2] FIG. 2 is a schematic diagram showing cash movement and account handling in a case where a bank account of a user and a bank account of a store are at the same bank.
[FIG. 3] FIG. 3 is a schematic diagram showing cash movement and account handling in a case where the bank account of the user and the bank account of the store are at different banks.
[FIG. 4] FIG. 4 is a schematic diagram showing a process flow in the case where the bank account of the user and the bank account of the store are at the same bank.
[FIG. 5] FIG. 5 is a schematic diagram showing a process flow in the case where the bank account of the user and the bank account of the store are at different banks.
[FIGS. 6A and 6B] FIGS. 6A and 6B illustrate a process of determining the content of transfer by a management server.
[FIGS. 7A to 7C] FIGS. 7A to 7C show examples of information managed by the management server.
[FIGS. 8A to 8C] FIGS. 8A to 8C show examples of display devices installed at a checkout counter of a store.
[FIG. 9] FIG. 9 is a flowchart showing a flow of a process in which a store server displays benefit information on a display device.
[FIG. 10] FIG. 10 shows an example of the benefit information displayed on the display device.

### DESCRIPTION OF EMBODIMENTS

Hereinafter, a cash receiving system and a cash receiving method according to the present disclosure will be described with reference to accompanying drawings. A user of the cash receiving system according to the present disclosure can receive, at a store, cash withdrawn from his/her account at a financial institution, without using an ATM (Automated Teller Machine).

Examples of the store include retail stores such as a supermarket and a convenience store. For example, if a location where an ATM is installed is far from the user, the user can receive the cash withdrawn from the account, at a retail store located near the user. After the user has received the cash at the store, the cash receiving system performs account handling for transferring a fund equivalent to the amount of the cash, from the account of the user to an account of the store. A commission is paid to the store that has passed the cash to the user on behalf of the financial institution. The cash receiving system deposits, to the account of the store, the total amount of the cash passed from the store to the user and the commission to be paid to the store. If the store has cash that the store wants to deposit into its account, by passing the cash present in the store to the user, the store can deposit an amount equivalent to the cash into the account. Moreover, the store can obtain a commission by passing the cash to the user.

The place where the user receives cash is not limited to a store, and may be any facility such as a station. In this embodiment, the cash receiving system and the cash receiving method will be described for a case where the place is a retail store selling items to customers, as an example. The types of the accounts of the user and the store are not particularly limited. In this embodiment, the cash receiving system and the cash receiving method will be described for a case where bank accounts are used, as an example.

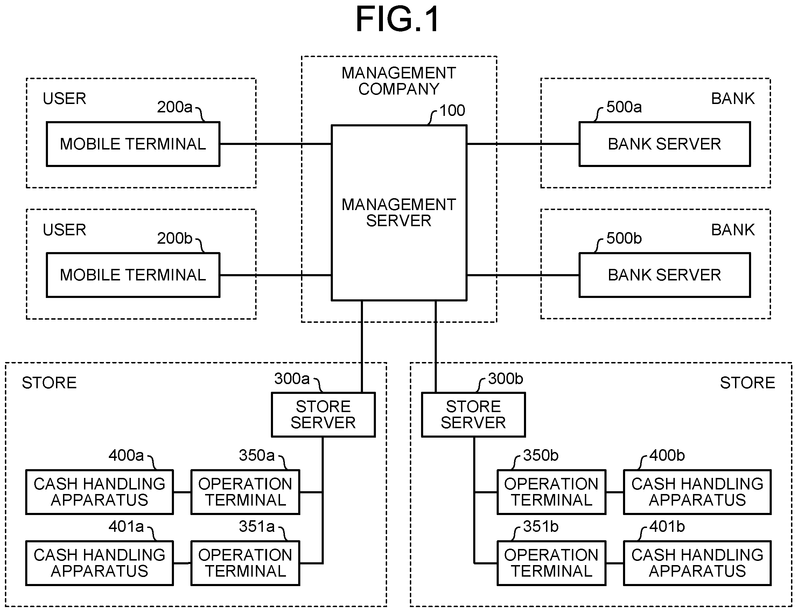

FIG. 1 is a block diagram showing the configuration of a cash receiving system 1 according to the present embodiment. The cash receiving system 1 includes a management server 100, mobile terminals 200 (200a, 200b), store servers 300 (300a, 300b), operation terminals 350 (350a, 350b) and 351 (351a, 351b), cash handling apparatuses 400 (400a, 400b) and 401 (401a, 401b), and bank servers 500 (500a, 500b).

FIG. 1 shows two users, two stores, and two banks, but the numbers thereof are not particularly limited. That is, the numbers of the mobile terminals 200, the store servers 300, and the bank servers 500 included in the cash receiving system 1 are not particularly limited. In FIG. 1, each store includes two operation terminals and two cash handling apparatuses, but the numbers thereof are not particularly limited. In the present embodiment, the function and operation of the operation terminal 351 are substantially identical to those of the operation terminal 350. Likewise, the function and operation of the cash handling apparatus 401 are substantially identical to those of the cash handling apparatus 400. Therefore, hereinafter, regarding the operation terminals 350, 351 and the cash handling apparatuses 400, 401, a description will be given of the operation terminal 350 and the cash handling apparatus 400.

The management server 100 is installed in a management company that manages the cash receiving system 1. The management server 100 is a computer device. The management server 100 may be operated by using an operation terminal not shown in figures. Alternatively, the management server 100 may be a computer device including an operation unit and a display unit. The management server 100 is communicably connected to each of the mobile terminals 200, the store servers 300, and the bank servers 500 wirelessly or via a wire.

The mobile terminal 200 is a portable communication device possessed by the user of the cash receiving system 1. Examples of the mobile terminal 200 include a smartphone and a tablet. The user can receive cash withdrawn from his/her bank account at a store by using the mobile terminal 200. When the user receives the cash at the store, the mobile terminal 200 is used for transmitting/receiving information to/from the operation terminal 350 in the store.

The store server 300, the operation terminal 350, and the cash handling apparatus 400 are installed in the store. The store server 300 is a computer device including an operation unit and a display unit. The store server 300 is communicably connected to the operation terminal 350. The store server 300 acquires information on the cash handling apparatus 400 from the operation terminal 350. The store server 300 can acquire and manage information on an inventory quantity of cash stored in the cash handling apparatus 400, i.e., information on denominations and the quantity for each denomination of the cash.

The operation terminal 350 includes an operation unit, a display unit, and a reading device for acquiring information from the mobile terminal 200. The operation terminal 350 transmits/receives information to/from the mobile terminal 200 possessed by the user. The cash handling apparatus 400 dispenses cash to be passed to the user from the store. The operation terminal 350 is communicably connected to the cash handling apparatus 400. The operation terminal 350 manages the cash currently stored in the cash handling apparatus 400. A clerk can control the cash handling apparatus 400 by operating the operation terminal 350.

For example, a cash register, which is used for checkout at a checkout counter in the store when a customer purchases items, is used as the operation terminal 350, and a change machine connected to the cash register is used as the cash handling apparatus 400.

However, the configurations of the operation terminal 350 and the cash handling apparatus 400 are not particularly limited as long as cash can be dispensed from the cash handling apparatus 400. The operation terminal 350 and the cash handling apparatus 400 may not necessarily be separate bodies, and may be integrated into one apparatus. For example, a self-checkout machine may function as the operation terminal 350 and the cash handling apparatus 400, or a semi-self-checkout machine may function as the operation terminal 350 and the cash handling apparatus 400. Alternatively, for example, a vending machine used for selling items in the store may function as the operation terminal 350 and the cash handling apparatus 400, or an automatic settlement machine used for payment of utility fees or the like in the store may function as the operation terminal 350 and the cash handling apparatus 400.

The bank server 500 is installed in a bank. The bank server 500 performs account handling to move funds between a plurality of bank accounts. The account handling includes a transfer process of moving a fund between bank accounts at the bank, and a transfer process of moving a fund from a bank account at the bank to a bank account at another bank.

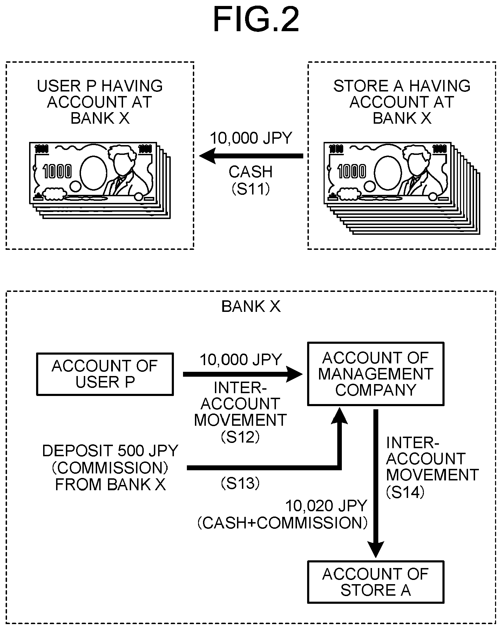

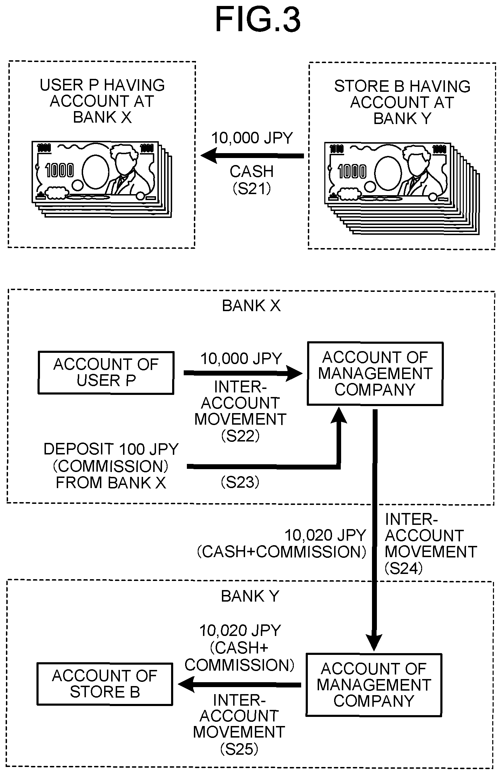

The outline of cash movement and account handling in the cash receiving system 1 will be described with reference to FIGS. 2 and 3. A user receives, at a store, cash withdrawn from his/her bank account. The store can receive, to a bank account of the store, an amount equivalent to the cash received by the user, i.e., the cash passed to the user from the store. The content of this account handling differs between the case where the bank account of the user and the bank account of the store are at the same bank and the case where the bank accounts are at different banks. In the present embodiment, the "accounts at the same bank" include accounts for which no transfer fee is charged for the transfer to move a fund between these accounts, while the "accounts at different banks" include accounts for which a transfer fee is charged for the transfer to move a fund between these accounts.

FIG. 2 is a schematic diagram showing cash movement and account handling in the case where a bank account of a user P and a bank account of a store A are at the same bank X. For example, when the user P wants to withdraw 10,000 JPY in cash from his/her bank account at the bank X, the user P goes to the store A and receives 10,000 JPY in cash as shown in FIG. 2 (step S11) .

Immediately after the handing over of the cash from the store A to the user P, a transfer of moving a fund of 10,000 JPY from the bank account of the user P to a bank account of a management company is performed (step S12). The amount of the fund moved from the bank account of the user P to the bank account of the management company is equal to the amount of the cash that the user P has received at the store A. That is, the user P can receive, at the store A, the cash of 10,000 JPY withdrawn from his/her bank account, without paying a fee.

By using the cash receiving system 1, the bank X can pass the cash withdrawn from the bank account, to the user P at the store A where no ATM is installed. Therefore, the bank X pays a predetermined commission to the management company that provides the cash receiving system 1 (step S13). For example, the bank X deposits 5% of the amount of cash received by the user P, as a commission, into the bank account of the management company at the bank X. The commission is 500 JPY when the user P has received 10,000 JPY at the store A.

The management company pays a predetermined commission to the store A that has passed the cash to the user P on behalf of the bank X. For example, the management company pays 0.2% of the amount of cash received by the user P, as a commission to the store. The commission to be received by the store A is 20 JPY when the user P has received 10,000 JPY at the store A. The management company performs a transfer of moving a fund of 10,020 JPY which is the sum of 10,000 JPY received from the bank account of the user P and the commission of 20 JPY to be paid to the store A, from the bank account of the management company to the bank account of the store A (step S14). Thus, by passing the cash present in the store A to the user P, the store can deposit the amount of the cash into the bank account of the store A, and obtain the commission.

FIG. 3 is a schematic diagram showing cash movement and account handling in the case where the bank account of the user P and a bank account of a store B are at different banks. In the example shown in FIG. 2, no transfer fee is charged on the account handling because the fund is moved between the accounts at the same bank X. Meanwhile, in the example shown in FIG. 3, a transfer fee is charged on account handling between the bank account of the user P and the bank account of the store B because these accounts are at different banks.

The user P, who wants to withdraw 10,000 JPY in cash from his/her bank account at the bank X, goes to the store B and receives 10,000 JPY in cash (FIG. 3, step S21) as in the case of FIG. 2. The store B has a bank account at a bank Y different from the bank X at which the user P has the bank account. Therefore, account handling is different from that shown in FIG. 2.

First, a transfer of moving a fund of 10,000 JPY corresponding to the cash that the user P has received at the store B is performed from the bank account of the user P at the bank X to the bank account of the management company at the bank X (FIG. 3, step S22). Since this transfer is account handling performed between the bank accounts at the same bank X, no transfer fee is charged for the account handling. The transfer is performed immediately after the user P has received the cash at the store B. This avoids the situation where the balance on the bank account of the user P will become insufficient and less than 10,000 JPY and therefore 10,000 JPY that the store B should obtain from the user P cannot be withdrawn from the bank account of the user P.

As in the case of FIG. 2, the bank X pays a predetermined commission by depositing the commission into the bank account of the management company (FIG. 3, step S23). For example, the bank X deposits 100 JPY corresponding to 1% of the amount of cash received by the user P, as a commission, to the bank account of the management company in the bank X. The commission to be paid from the bank X to the management company can be changed depending on whether or not a store that has passed cash to the user P has a bank account at the bank X, which will be described later.

As in the case of FIG. 2, the management company pays a predetermined commission to the store B that has passed the cash to the user P on behalf of the bank X. For example, the management company pays 20 JPY corresponding to 0.2% of the amount of cash received by the user P, as a commission to the store.

The management company has bank accounts at both the bank X and the bank Y. The management company performs a transfer of moving a fund of 10,020 JPY, which is the sum of 10,000 JPY received in the bank account of the management company from the bank account of the user P at the bank X and 20 JPY that is the predetermined commission to be paid to the store B, from the bank account of the management company at the bank X to the bank account of the management company at the bank Y (FIG. 3, step S24). This transfer is account handling performed between the accounts at different banks. Therefore, the management company has to pay a transfer fee to the bank X. The management company performs a process for suppressing the transfer fee, which will be described later.

The management company performs a transfer of moving a fund of 10,020 JPY, which is the sum of 10,000 JPY passed from the store B to the user P and 20 JPY as the commission, from the bank account of the management company in the bank Y to the bank account of the store B in the same bank Y (step S25). Since this transfer is account handling performed between the bank accounts at the same bank Y, no transfer fee is charged. Thus, by passing the cash present in the store B to the user P, the store can deposit the amount of the cash into the bank account of the store B, and obtain the commission.

As described above, the user of the cash receiving system 1 can receive, at the store, the cash withdrawn from his/her bank account. The user need not pay a service fee when receiving the cash at the store. The cash passed from the store to the user is returned to the store by depositing the same amount of the cash into the bank account of the store. Thus, the store can deposit the cash present in the store, into the bank account of the store, without going to the bank. Moreover, each time the store passes cash to a user, the store can obtain a commission from the management company. The bank can provide the user with a service of cash withdrawal from the bank account, without installing an ATM in the store, in a similar way to an ATM installed in the store. The bank needs to pay a commission to the management company, but need not perform installation, maintenance and inspection of an ATM, and management of cash in the ATM. Therefore, the bank can achieve reduction in total cost as compared to the case where an ATM is installed in each store.

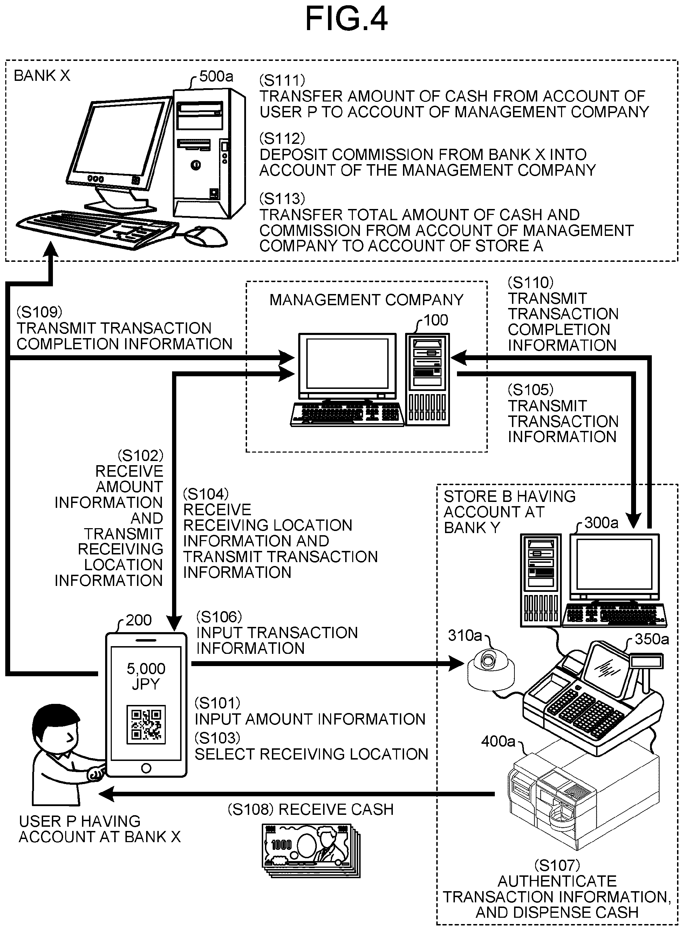

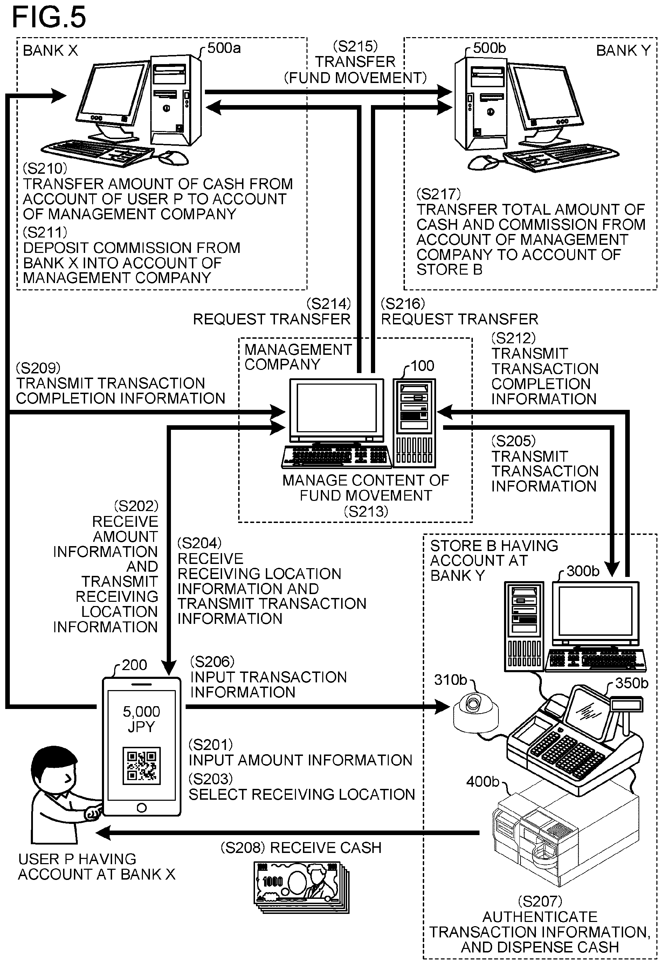

A method to realize the processes shown in FIG. 2 and FIG. 3 by the cash receiving system 1 will be described with reference to FIGS. 4 and 5. FIG. 4 corresponds to FIG. 2, and FIG. 5 corresponds to FIG. 3. FIG. 4 is a schematic diagram showing a process flow in the case where the bank account of the user P and the bank account of the store A are at the same bank X.

The user P, who wants to withdraw cash from his/her bank account at the bank X, starts a dedicated application by operating the mobile terminal 200 and inputs a withdrawal amount, as shown at the lower left in FIG. 4 (step S101).

The management server 100 receives the amount information inputted to the mobile terminal 200, and transmits, to the mobile terminal 200, information on stores at which the user P can receive the cash (step S102).

Specifically, first, the management server 100 confirms that the amount of cash that the user P wants to withdraw from the bank account does not exceed the balance on the bank account of the user P. For example, the management server 100 internally manages information on the bank account of each user and performs the confirmation based on the information. Alternatively, for example, the management server 100 transmits the withdrawal amount requested by the user P to the bank server 500a of the bank X, and requests the bank server 500a to confirm that the amount does not exceed the balance on the bank account of the user P. If the amount inputted to the mobile terminal 200 exceeds the account balance, the management server 100 displays information indicating this fact on the screen of the mobile terminal 200, and requests the user P to change the amount.

Upon confirming that the withdrawal amount requested by the user P does not exceed the balance on the bank account of the user P, the management server 100 searches for stores that can pass the cash to the user P from among a plurality of stores using the cash receiving system 1. For example, the management server 100 internally manages information on cash that each store can pass to the user, and searches for stores, based on this information. Alternatively, for example, the management server 100 transmits the withdrawal amount requested by the user P to the store server 300 of each store, and inquires whether or not the store can pass the cash to the user P, thereby searching for stores.

For example, the store server 300a determines whether or not to perform the handing over of the cash, based on whether or not the store is open and/or whether or not the store is crowded, and notifies the management server 100 of the determination result. The determination can be automatically performed by the store server 300a based on information, which indicates how crowded the store is, on the status of use of the cash handling apparatus 400a within a predetermined period. Alternatively, the determination can be manually performed by the clerk through an operation on the store server 300a or the operation terminal 350a, which will be described later. When the store has determined not to perform the handing over of cash in the store, the management server 100 is notified of this determination result and excludes this store from a list of stores capable of dispensing the cash. Thus, the store can suspend the service of passing the cash to the user, through the automatic determination by the store server 300a or the manual operation by the clerk. Examples of the clerk who performs the determination by the manual operation of the store server 300 include a manager and a person in charge of the store.

The management server 100 acquires, from the mobile terminal 200 possessed by the user P, location information indicating the current location of the mobile terminal 200. The management server 100 creates a list of stores capable of passing the requested amount of cash to the user P, within a predetermined distance range centered around the current location of the user P. The management server 100 transmits the created list to the mobile terminal 200.

The user P checks the store list received from the management server 100 and displayed on the screen of the mobile terminal 200. By operating the mobile terminal 200, the user P selects the store A as a store at which the user P will receive the cash, from among the stores in the store list (step S103).

The management server 100 receives the selection result of the user P from the mobile terminal 200, creates transaction information for the user P to receive the cash at the selected store A, and transmits the transaction information to the mobile terminal 200 (step S104). The transaction information may include: user identification information (user ID) for identifying the user P; store identification information (store ID) for identifying the store A selected by the user P; information on the cash that the user P will receive from the store A; and authentication information for the transaction to receive the cash.

The authentication information included in the transaction information is a one-time password, for example. A third party is not able to know the one-time password. Therefore, the third party cannot counterfeit the transaction information and impersonate the user P, whereby security of cash handing over transaction performed at the store can be ensured.

The management server 100 transmits the transaction information to the store server 300a of the store A selected by the user P (step S105). In order to keep in the store the cash to be passed to the user P, the store server 300a starts management of cash currently stored in the cash handling apparatus 400a. Specifically, denominations and the quantity for each denomination of cash in the cash handling apparatus 400a are managed so that the user P, having arrived at the store A, can receive the requested amount of cash.

The user P goes to the store A selected by using the mobile terminal 200. The mobile terminal 200 generates a graphic code in which the transaction information received from the management server 100 is encoded. The mobile terminal 200 displays the generated graphic code on the screen. Although the type of the graphic code is not particularly limited, the description will be continued on assumption that the graphic code is a QR code (registered trademark).

A camera 310a is connected to the operation terminal 350a in the store A. The camera 310a functions as a reading device with which the operation terminal 350a receives information from the mobile terminal 200. The user P, having arrived at the store A, causes the camera 310a to read the QR code displayed on the screen of the mobile terminal 200 (step S106). At this time, the operation terminal 350a can capture and save an image of the user P by using the camera 310a. If a problem occurs later, the image of the user P thus captured is used.

The operation terminal 350a decodes the QR code read by the camera 310a to obtain the transaction information. Based on the information such as the user ID included in the transaction information obtained from the QR code, the operation terminal 350a acquires the corresponding transaction information from the store server 300a. The operation terminal 350a collates the transaction information obtained from the mobile terminal 200 with the transaction information that the store server 300a has received from the management server 100.

The operation terminal 350a authenticates the user P, based on the authentication information included in the transaction information. Specifically, the operation terminal 350a confirms that the same authentication information is included in both the transaction information obtained from the mobile terminal 200 and the transaction information obtained from the management server 100. When there is a match in authentication information, the authentication process is normally ended. If the authentication process has not been normally ended, the operation terminal 350a performs a notification process. For example, the operation terminal 350a displays, on the screen, that correct authentication information is not included in the transaction information to notify the clerk of the same. Upon receiving the notification, the clerk can confirm the transaction information and the identity of the user P.

The authentication process may be performed such that the store server 300a acquires the transaction information of the mobile terminal 200 from the operation terminal 350a. As for the method of transmitting/receiving information between the mobile terminal 200 and the operation terminal 350a, the operation terminal 350a may display, on the display unit, a QR code in which the transaction information obtained from the management server 100 is encoded, and the user P may read the QR code by using the mobile terminal 200. In this case, the authentication process can be performed on the mobile terminal 200. If there is an abnormality in the authentication information, information indicating the abnormality is transmitted from the mobile terminal 200 to the operation terminal 350a via the management server 100 and the store server 300a, and the operation terminal 350a performs the notification process.

When the authentication process has been normally ended, the operation terminal 350a dispenses cash equivalent to the amount requested by the user P from the cash handling apparatus 400a (step S107). The user P receives the cash dispensed from the cash handling apparatus 400a (step S108). Thus, the user P can receive, at the store A, the cash equivalent to the amount inputted in step S101.

The user P, having received the cash, performs a transaction completion operation on the mobile terminal 200, and the mobile terminal 200 transmits completion information indicating completion of the cash handing over transaction to the bank server 500a of the bank X and the management server 100 (step S109). After the cash handling apparatus 400a has dispensed the cash to be passed to the user P, the clerk of the store A performs a transaction completion operation on the operation terminal 350a, whereby the operation terminal 350a notifies the store server 300a that the cash handing over transaction has been completed. Upon receiving the notification, the store server 300a transmits the completion information to the management server 100 (step S110). Thus, in the cash receiving system 1, by transmitting and receiving the completion information, the bank and the management company can confirm that the user has received the cash at the store.

The completion information may include: the user ID of the user P; information for specifying the bank account of the user P; the store ID of the store A; information for specifying the bank account of the store A; information on the cash that the user P has received from the store A; and information on date and time when the transaction was completed. The management server 100 manages transaction history based on the completion information, which will be described later in detail.

The bank server 500a of the bank X specifies the amount of the cash that the user P has received at the store A, based on the completion information. Moreover, the bank server 500a specifies the bank account of the user P and the bank account of the store A, based on the completion information. The bank server 500a performs a transfer of moving a fund equivalent to the amount of the cash received by the user P, from the bank account of the user P to the bank account of the management company (step S111).

The bank server 500a deposits a commission to be paid from the bank X to the management company, into the bank account of the management company (step S112). Moreover, the bank server 500a performs a transfer of the total amount of the cash that the user P has received at the store A and the commission to be paid from the management company to the store A, from the bank account of the management company to the bank account of the store A (step S113).

The completion information may not necessarily be transmitted from both the mobile terminal 200 and the store server 300a to the management server 100, and may be transmitted from one of the mobile terminal 200 and the store server 300a. The bank server 500a may not necessarily receive the completion information to perform the account handling. The management server 100 having received the completion information may instruct the bank server 500a to perform the account handling of steps S111 to S113.

FIG. 5 is a schematic diagram showing a process flow in the case where the bank account of the user P and the bank account of the store B are at different banks. Hereinafter, processes shown in FIG. 5 will be described mainly with respect to differences from the processes shown in FIG. 4. The user P having a bank account at the bank X goes to the store B having a bank account at the bank Y, and causes a camera 310b connected to the operation terminal 350b to read a QR code displayed on the screen of the mobile terminal 200. Thus, the user P can receive cash dispensed from the cash handling apparatus 400b. The processes in steps S201 to S208 until the user P receives the cash at the store B are the same as the processes in steps S101 to S108 shown in FIG. 4, and therefore, detailed description thereof will be omitted.

The user P having received the cash at the store B performs a transaction completion operation on the mobile terminal 200, and the mobile terminal 200 transmits completion information to the bank server 500a of the bank X and the management server 100 of the management company (step S209).

The bank server 500a specifies the amount of the cash that the user P has received at the store B, based on the completion information. Moreover, the bank server 500a, based on the completion information, specifies the bank account of the user P and recognizes that the store B does not have a bank account at the bank X. The bank server 500a performs a transfer of moving a fund equivalent to the amount of the cash received by the user P, from the bank account of the user P to the bank account of the management company at the bank X (step S210). The bank server 500a of the bank X deposits a commission paid from the bank X, into the account of the management company at the bank X (step S211). The management server 100 manages transaction history based on the completion information, which will be described later in detail.

After the cash handling apparatus 400b has dispensed the cash to be passed to the user P, the clerk of the store B performs a transaction completion operation by using the operation terminal 350b. Then, the operation terminal 350b notifies the store server 300b that the cash handing over transaction has been completed. Upon receiving the notification, the store server 300b transmits completion information to the management server 100 (step S212).

The management server 100 recognizes the amount of the cash that the user P has received from the store B, based on the completion information. The management server 100, based on the completion information, manages movement of a fund between the banks, i.e., the content of a transfer of the fund to be performed between the banks (step S213).

The completion information may not necessarily be transmitted from both the mobile terminal 200 and the store server 300b to the management server 100, and may be transmitted from only one of the mobile terminal 200 and the store server 300b. The bank server 500a may not necessarily receive the completion information to perform the account handling. The management server 100 having received the completion information may instruct the bank server 500a to perform the account handling in steps S210 and S211.

The management server 100 instructs the bank server 500a of the bank X to perform a transfer from the bank account of the management company at the bank X to the bank account of the management company at the bank Y (step S214). The management server 100 can sum up the amounts of funds to be moved for a plurality of transactions, and performs inter-bank fund movements through one transfer, which will be described later.

Upon receiving the transfer instruction from the management server 100, the bank server 500a performs a transfer from the bank account of the management company at the bank X to the bank account of the management company at the bank Y (step S215). As a result, a fund equivalent to an amount including the amount of the cash that the user P has received at the store B is moved from the bank account of the management company at the bank X to the bank account of the management company at the bank Y.

The management server 100 instructs the bank server 500b of the bank Y to perform a transfer from the bank account of the management company at the bank Y to the bank account of the store B at the same bank Y (step S216). The management server 100 instructs the transfer of the total amount of the cash that the user P has received at the store B and a commission to be paid from the management company to the store B.

Upon receiving the transfer instruction from the management server 100, the bank server 500b performs a transfer from the bank account of the management company to the bank account of the store B (step S217). As a result, the total amount of the cash that the user P has received at the store B and the commission to be paid from the management company to the store B is deposited into the bank account of the store B.

When a transfer is performed between different banks as shown in step S215 in FIG. 5, the management company has to pay transfer fees to the bank. If a transfer is performed between different banks each time a cash handing over transaction is performed between a store and a user, the transfer fees to be paid from the management company to the banks become expensive. Therefore, the management server 100 puts a plurality of transactions together and thereafter instructs the bank server 500 to perform a transfer.

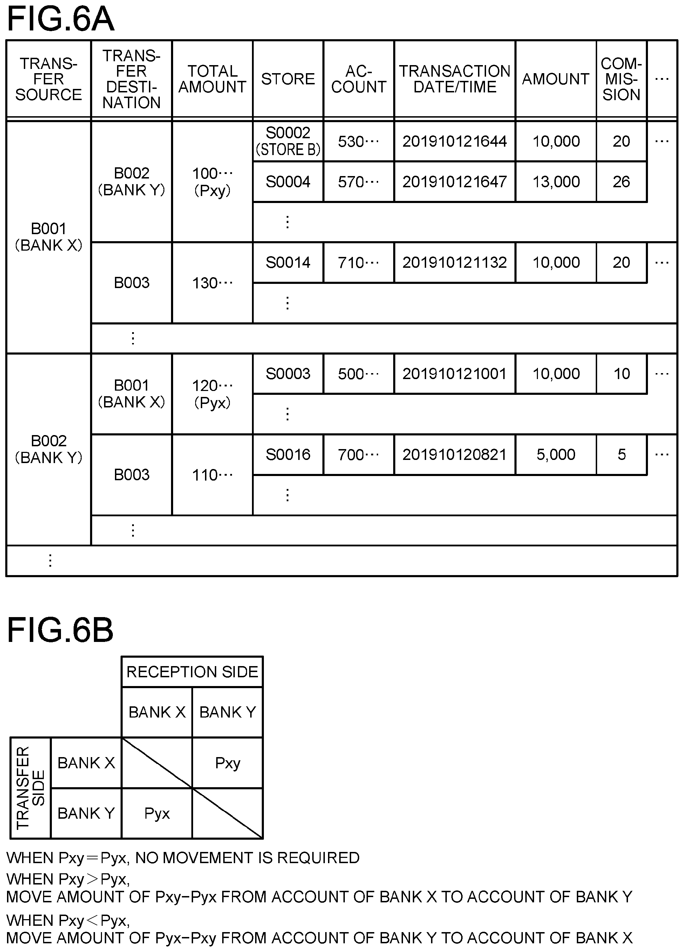

FIGS. 6A and 6B are diagrams illustrating a process of determining the content of transfer, by the management server 100. FIG. 6A shows an example of information managed by the management server 100, and FIG. 6B shows a method of determining, by the management server 100, the content of an inter-bank transfer to be performed in order to move a fund from a bank account of a management company to a bank account of a store.

As shown in FIG. 6A, the management server 100 manages information on inter-bank transfers. The management server 100 can manage the information shown in FIG. 6A, based on the completion information received in steps S209 and S212 in FIG. 5.

As shown in FIG. 6A, for each of banks to be a transfer source when an inter-bank transfer is performed, a bank as a transfer destination and a total amount to be transferred to the bank are managed. The total amount is obtained by summing up the amounts of cash that users have received at stores, and commissions to be paid from the management company to the stores. In FIG. 6A, the amount under the listing of "total amount" can be obtained by summing up amounts under the listing of "amount" and amounts under the listing of "commission" for each transfer destination.

The management server 100 performs an inter-bank transfer at a predetermined timing. For example, the management server 100 performs, twice a day, a transfer instruction to the bank server 500 of each bank to perform the inter-bank transfer, as shown in step S214 of FIG. 5.

When instructing the inter-bank transfer to the bank server 500, the management server 100 determines a transfer amount as shown in FIG. 6B, based on the information shown in FIG. 6A. In FIG. 6B, bank X, bank Y, and amounts Pxy and Pyx correspond to those parenthesized in FIG. 6A.

For example, as shown in FIG. 6B, when the amount Pxy to be transferred from the bank X to the bank Y is equal to the amount Pyx to be transferred from the bank Y to the bank X, the management server 100 determines not to perform a transfer. In this case, since fund movement between the banks is not required, the management server 100 does not provide transfer instructions to the bank servers 500a and 500b.

If the amount Pxy is larger than the amount Pyx, the management server 100 determines to transfer an amount obtained by subtracting Pyx from Pxy, from the bank X to the bank Y. In this case, a fund equivalent to the amount of (Pxy-Pyx) needs to be moved from the bank X to the bank Y. Therefore, the management server 100 provides a transfer instruction to the bank server 500a of the bank X.

If the amount Pyx is larger than the amount Pxy, the management server 100 determines to transfer an amount obtained by subtracting Pxy from Pyx, from the bank Y to the bank X. In this case, a fund equivalent to the amount of (Pyx-Pxy) needs to be moved from the bank Y to the bank X. Therefore, the management server 100 provides a transfer instruction to the bank server 500b of the bank Y.

Although two banks have been described as examples in FIG. 6B, the management server 100 manages information as shown in FIG. 6A for all the banks, and determines the amounts of funds to be moved between a plurality of banks. When it is required to move funds between a plurality of banks, the management server 100 determines what amount of a fund will be finally moved from which bank to which bank as a result of the inter-bank fund movements, and performs fund movement based on the determination result.

For example, if a fund of 500,000 JPY needs to be moved from the bank X to the bank Y, a fund of 1,000,000 JPY needs to be moved from the bank Y to a bank Z, and a fund of 500,000 JPY needs to be moved from the bank Z to the bank X, a fund of 500,000 JPY will be finally moved from the bank Y to the bank Z as a result of the three fund movements. Therefore, the management server 100 performs one fund movement of 500,000 JPY from the bank Y to the bank Z instead of performing three fund movements between the three banks, thereby completing the fund movement between the three banks.

As described above, as for a plurality of transactions in which users have received cash at stores, the management server 100 sums up the amounts to be transferred between the banks and handles fund movements for the plurality of transactions by one transfer. Moreover, the management server 100 offsets an amount of a fund to be moved from a first bank to a second bank by an amount of a fund to be moved from the second bank to the first bank, and moves a fund equivalent to a resultant difference. That is, the management server 100 does not separately perform a transfer from the first bank to the second bank and a transfer from the second bank to the first bank, but offsets the transfer amounts so as to be handled by one transfer. This allows the management company to reduce the number of transfers and suppress the transfer fees. Moreover, burden on transfer handling in the banks can also be reduced.

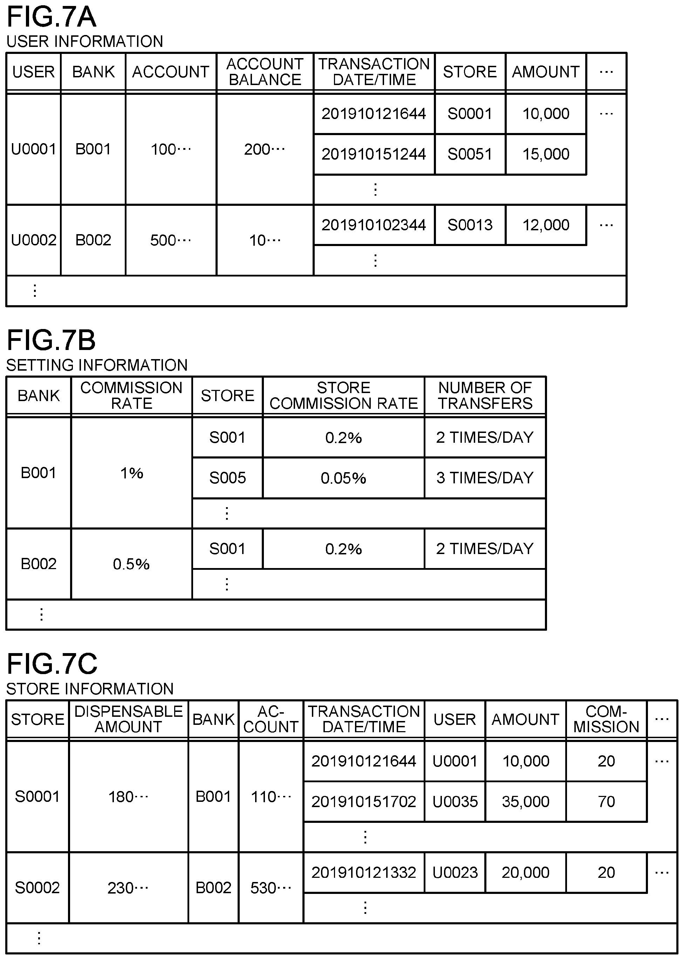

The management server 100 can manage information on users, information on stores, and information on transactions in which the users have received cash at the stores. FIGS. 7A to 7C show examples of information managed by the management server 100. FIG. 7A shows an example of user information, FIG. 7B shows an example of setting information for calculating a commission to be paid from each bank to the management company and a commission to be paid from the management company to each store, and FIG. 7C shows an example of store information.

As shown in FIG. 7A, the user information may include information on a bank account of each user, and information on a balance on the bank account. When the amount of cash that a user wants to receive at a store exceeds the balance on the bank account of the user, the management server 100, based on the pieces of information, can detect this fact and ask the user to change the amount. However, the pieces of information on the bank account and the account balance may not necessarily be included in the user information, and the management server 100 may acquire these pieces of information through an inquiry to the bank server 500.

The user information may include information on transaction date and time when the user received cash at a store, a store ID of this store, and information on the amount of the received cash. The management server 100, based on these pieces of information, can detect a user who has performed the abnormally large number of transactions and notify the management company of this user. Furthermore, the management server 100 can detect a user who has received an abnormally large amount of cash at a store. Moreover, the management server 100 can also detect a user whose number of transactions has abnormally increased within a predetermined period, and a user whose amount of received cash has abnormally increased within a predetermined period. These detection processes are identical to detection processes performed based on store information described later, and therefore, are not described here.

As shown in FIG. 7B, the management server 100 manages, for each bank, a commission rate of a commission that the management company obtains from the bank, and a commission rate ("store commission rate" in FIG. 7B) of a commission that the management company pays to a store. Thus, the management company can change the commission rate for each bank. Moreover, the management company can change the commission rate for each store.

In the management server 100, it can be set that the commission rate is changed when a predetermined condition is satisfied by preparing the condition for changing the commission rate of each store in advance. For example, the management company may increase the commission rate of a store in which the number of cash handing over transactions of passing cash to users exceeds a predetermined number.

In the setting information shown in FIG. 7B, the listing of "number of transfers" indicates the number of transfers to be performed between different banks when a bank account of a user and a bank account of a store are at the different banks as shown in FIGS. 3 and 5. The management company can set the number of transfers for each store. For example, the number of transfers is set to twice a day for stores. For example, if a store requests three transfers a day, the management company can meet this request by changing the setting of the number of transfers of this store to three transfers a day.

In the management server 100, it can be set that an inter-bank transfer is performed when the predetermined condition is satisfied by preparing the condition for performing the transfer in advance. For example, if a store requests a transfer to a bank account of the store immediately after the amount to be deposited in the bank account of the store exceeds a predetermined amount (threshold), the management company can meet this request of the store by preparing in advance setting corresponding to this condition. For example, when the threshold is set to 1,000,000 JPY, if the total amount of cash passed from the store to users exceeds 1,000,000 JPY, the total amount including 1,000,000 JPY and commissions is deposited into the bank account of the store. When the depositing into the account has been performed, the amount of the passed cash is reset to 0 (zero). Thereafter, when the total amount of cash passed from the store to users again exceeds 1,000,000 JPY, the total amount including 1,000,000 JPY and commissions is again deposited into the bank account of the store.

The management server 100 can manage the store information as shown in FIG. 7C. In the store information, the amount of cash that each store can pass to users is managed as the listing of a dispensable amount. However, the dispensable amount may not necessarily be included in the store information. As described above, the management server 100 may acquire this information through an inquiry to the store server 300.

The store server 300 of each store can manage an inventory quantity of cash in the cash handling apparatus 400 used in the store. The inventory quantity of cash is information including denominations and the quantity for each denomination of cash stored in the cash handling apparatus 400.

The store server 300 transmits to the management server 100 based on the information of the inventory quantity of cash, information on cash that can be dispensed from the cash handling apparatus 400 for users of the cash receiving system 1. The management server 100 manages the dispensable amount for each store as shown in FIG. 7C based on the information received from the store server 300.

The store server 300 can keep the dispensable amount as 0 (zero) until the amount of cash currently stored in the cash handling apparatus 400 reaches an amount that is set in advance as a threshold in the store. When the amount of cash currently stored in the cash handling apparatus 400 exceeds the threshold amount, the store server 300 regards an amount exceeding the threshold, as the dispensable amount.

Thus, the store can manage cash to be deposited into the bank account of the store through passing of the cash from the store to the user. For example, if the store wants to, when the amount of cash currently stored in the handling apparatus 400 exceeds 500,000 yen, deposit an amount corresponding to a part exceeding 500,000 JPY into the bank account of the store, the store sets the threshold to 500,000 JPY. The store server 300 determines that the store does not have cash to be deposited into the bank account until the amount stored in the cash handling apparatus 400 reaches 500,000 JPY, and keeps the dispensable amount as 0 (zero). When the amount stored in the cash handling apparatus 400 exceeds 500,000 JPY, the store server 300 determines that the store has cash to be deposited into the bank account. For example, when the amount stored in the cash handling apparatus 400 has reached 520,000 JPY, the store server 300 determines that the amount of cash to be deposited into the bank account of the store, i.e., the dispensable amount, is 20,000 JPY.

The store server 300 can keep the dispensable amount as 0 (zero) until a timing set in advance by the store comes. When the timing set by the store has come, the store server 300 regards, as the dispensable amount, an amount exceeding a predetermined amount out of the cash currently stored in the cash handling apparatus 400.

Thus, the store can manage a transaction timing at which the store passes, to the user, cash to be deposited into the bank account of the store. For example, a store, which does not want to perform a cash handing over transaction during peak hours, sets a time period during which the store is not crowded, as a time period for the cash handing over transaction. A clerk can set a time period for the cash handing over transaction by designating at least one of date, day of week, and time of day by operating the store server 300. The store server 300 determines that the store does not have cash to be deposited in the bank account and keeps the dispensable amount as 0 (zero) during a time period other than the set time period. When the time period designated by the store has come, the store server 300 determines that the store has cash to be deposited in the bank account. The store server 300 determines, as the dispensable amount, an amount exceeding the amount that has been set as the threshold by the store, out of the cash currently stored in the cash handling apparatus 400. For example, when the threshold is set to 500,000 JPY, if the amount stored in the cash handling apparatus 400 is 520,000 JPY, the store server 300 determines that the dispensable amount is 20,000 JPY. If the amount of cash stored in the cash handling apparatus 400 is not larger than 500,000 JPY, the store server 300 keeps the dispensable amount as 0 (zero) even during the set time period. A time period in which the cash handing over transaction is not performed may be set instead of the time period in which the cash handing over transaction is performed.

When the clerk has performed a predetermined operation on the store server 300, the store server 300 can regard, as the dispensable amount, an amount exceeding a predetermined amount out of the cash currently stored in the cash handling apparatus 400. Examples of the clerk who performs the predetermined operation by using the store server 300 include a manager and a person in charge of the store.

Thus, the store can manage a transaction timing at which cash that the store wants to deposit into the bank account of the store is passed to the user. For example, it is assumed that a time period in which the store is crowded is set as a time period in which no cash handing over transaction is performed. In this case, even during the time period in which cash handing over transaction is not to be performed, if the clerk, who has determined that the store is not crowded, performs the predetermined operation on the store server 300, the store server 300 determines that the store has cash to be deposited into the bank account. Then, the store server 300 regards, as the dispensable amount, an amount exceeding the amount that has been set as the threshold by the store, out of the cash currently stored in the cash handling apparatus 400. For example, when the threshold is set to 500,000 JPY, if the amount stored in the cash handling apparatus 400 is 520,000 JPY, the store server 300 determines the dispensable amount to be 20,000 JPY. If the amount stored in the cash handling apparatus 400 is not larger than 500,000 JPY, the store server 300 keeps the dispensable amount as 0 (zero) even if the clerk performs the predetermined manual operation.

When the dispensable amount has been changed, the store server 300 can notify the management server 100 of the change. The management server 100 registers, in the store information, the dispensable amount obtained from the store server 300. The management server 100, based on the registered dispensable amount, can extract stores capable of performing a cash handing over transaction with a user, and present a list of the stores to the user. When the dispensable amount becomes not 0 (zero) through the automatic determination by the store server 300 or the manual operation by the clerk, i.e., when the cash handing over transaction between the store and the user becomes executable, a process of notifying the content of benefit to be given to the user at the time of transaction is performed, which will be described later.

In the above description, for simplification, the store server 300 manages the inventory quantity of cash stored in one cash handling apparatus 400. However, the store server 300 can manage inventory quantities of cash stored in each of a plurality of cash handling apparatuses 400 installed in the store, and transmit, to the management server 100, information on cash that the store can pass to the user. The dispensable amount calculating method in the case where there are a plurality of cash handling apparatuses, can be changed through setting. For example, if 50,000 JPY can be dispensed from one of two cash handling apparatuses installed in the store while 70,000 JPY can be dispensed from the other cash handling apparatus, the store server 300 can set, as the dispensable amount of the store, 120,000 JPY which is the sum of the amounts. Alternatively, in order to complete passing of cash to the user by using one cash handling apparatus, the store server 300 can set the dispensable amount to 70,000 JPY.

Moreover, information on denominations and the quantity for each denomination of cash that the store can dispense can also be included in the store information. Thus, the management server 100 can receive denominations and the quantity for each denomination of cash that a user requests to receive, and search for stores capable of meeting the request. The user can receive, at the store, the cash in the requested denominations and in the requested quantity for each denomination.

As shown in FIG. 7C, the store information may include: information on transaction date and time when each store passed cash to a user; a user ID of the user who received the cash; information on the amount of the cash that the store passed to the user; and information on the amount of a commission that the store can obtain from the management company.

The management server 100, based on these pieces of information, can detect a store that has performed the abnormally large number of cash handing over transactions with user(s). Moreover, the management server 100 can detect a store whose total amount of commissions is abnormally large, and/or a store whose total amount of cash passed to user(s) is abnormally large, based on the store information. These detection processes can be performed by comparing the number of transactions, the total amount of commissions, and the total amount of cash passed to user(s), with thresholds set in advance for the number and the amounts. If at least one of the number of transactions, the total amount of commissions, and the total amount of cash passed to user(s) exceeds the corresponding threshold, the management server 100 determines that there is an abnormality. Thus, the management server 100 can detect a store whose number of transactions performed with user(s) and/or whose amount of cash passed to user(s) indicates an abnormal value. The management server 100 can detect a store whose number of transactions, total amount of commissions, and/or total amount of cash passed to the users indicates an abnormal value even when different users have received cash from the store.

The management server 100, based on the store information, can detect a store whose number of transactions has rapidly increased within a predetermined period. Moreover, the management server 100 can detect a store whose total amount of commissions has rapidly increased within a predetermined period, and/or a store whose total amount of cash passed to user(s) has rapidly increased within a predetermined period. These detection processes are performed by comparing increments of the number of transactions, the total amount of commissions, and the total amount of cash within the predetermined period, with thresholds set in advance for the number and the amounts. If the increment, within the predetermined period, of at least one of the number of transactions, the total amount of commissions, and the total amount of cash passed to user(s) exceeds the corresponding threshold, the management server 100 determines that there is an abnormality. Thus, the management server 100 can detect a store whose number of transactions with user(s) and/or whose amount of cash passed to user(s) has rapidly increased. Moreover, the management server 100 can detect a store, even when different users have received cash from the store, whose number of transactions, total amount of commissions, and/or total amount of cash passed to the users has rapidly increased. The process of detecting user(s) whose transaction content is abnormal by the management server 100 based on the user information shown in FIG. 7A, is also performed by comparing each of values to be monitored with a threshold set in advance for the corresponding value.

Upon detecting an abnormality, the management server 100 performs a process of notifying the management company of the abnormality. The notification process is performed such that the management server 100 serving as a notification unit displays information indicating the detection result on the display unit. For example, the management server 100 displays, on the display unit, the reason of determination of the abnormality and information on the store and the user(s) of which the abnormality was detected. Upon receiving the notification, the management company can check the information on the display unit, and confirms the situation by referring to the information shown in FIGS. 7A to 7C.

A store performs a cash handing over transaction with a user who visits the store, and passes cash present in the store to the user, whereby the store can deposit an amount of the cash into the bank account of the store. Therefore, the store need not carry the cash from the store to the bank in order to deposit the cash into the bank account. This is a great advantage for the store. The store, by using the store server 300, can give a benefit to the user who receives cash at the store so that many users will receive cash at the store.

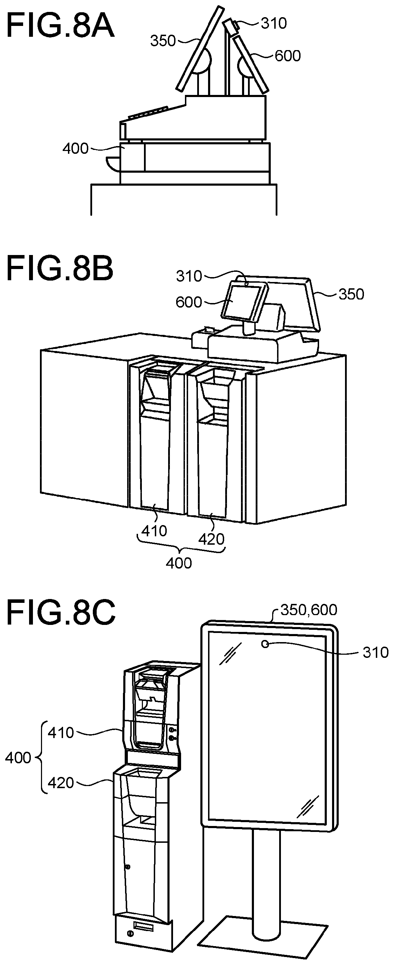

For example, points that can be used for purchasing items at the store are given as the benefit to the user. The store can notify the user of information on the benefit by using a display device 600 connected to the operation terminal 350. FIGS. 8A to 8C show examples of the display device 600 disposed at a checkout counter of the store.

FIG. 8A shows an example of the checkout counter at which a clerk of the store performs checkout. In this example, a cash register serves as the operation terminal 350, and a change machine connected to the cash register serves as the cash handling apparatus 400.

The clerk operates the cash register to perform checkout of items purchased by customers. The checkout counter is provided with the camera 310 that is caused to read a QR code on the mobile terminal 200 of a customer who receives cash withdrawn from his/her bank account, as described in FIGS. 2 to 5. Furthermore, the checkout counter is provided with the display device 600 for displaying benefit information. While the checkout is performed, the customer can confirm the benefit information displayed on the display device 600.

FIG. 8B shows an example of a semi-self-checkout counter with which the clerk of the store inputs price information of items and the customer performs payment for the items. In this example, a cash register functions as the operation terminal 350, and a banknote depositing/dispensing unit 410 and a coin depositing/dispensing unit 420 connected to the cash register function as the cash handling apparatus 400.

The clerk operates the cash register to input price information of items. When the total price of items to be paid by the customer has been determined, the customer inserts cash into the cash handling apparatus 400 by him/herself. If there is change to be returned to the customer, the customer receives the change dispensed from the cash handling apparatus 400.

The checkout counter is provided with the display device 600 that displays the prices of the respective items and the total price to be paid at the time of checkout. The camera 310 is disposed on an upper part of the display device 600. The camera 310 is caused to read the QR code on the mobile terminal 200 of the customer who receives cash withdrawn from his/her bank account, as described in FIGS. 2 to 5. The display device 600 displays, on a part of the screen, benefit information to be informed to the customer. While the checkout is performed, the customer can confirm the benefit information displayed on the display device 600.

FIG. 8C shows an example of a self-checkout counter at which the customer of the store performs checkout. In this example, a touch panel type liquid crystal display device, with which the customer selects items, functions as the operation terminal 350. The cash handling apparatus 400 connected to the operation terminal 350 includes a banknote depositing/dispensing unit 410 and a coin depositing/dispensing unit 420.

The customer selects items to purchase from among items listed and displayed on the operation terminal 350. When items to be purchased by the customer and the total price of the items have been determined, the customer inserts cash into the cash handling apparatus 400 by him/herself. When there is change to be returned to the customer, the customer receives the change dispensed from the cash handling apparatus 400.

The camera 310 is disposed on an upper part of the operation terminal 350. The camera 310 is caused to read the QR code on the mobile terminal 200 of the customer who receives the cash withdrawn from his/her bank account, as described in FIGS. 2 to 5. The operation terminal 350 also functions as the display device 600 that informs the customer of benefit information. The benefit information to be informed to the customer is displayed on a part of the screen of the operation terminal 350. While selecting items and performing checkout, the customer can confirm the benefit information displayed on the operation terminal 350.

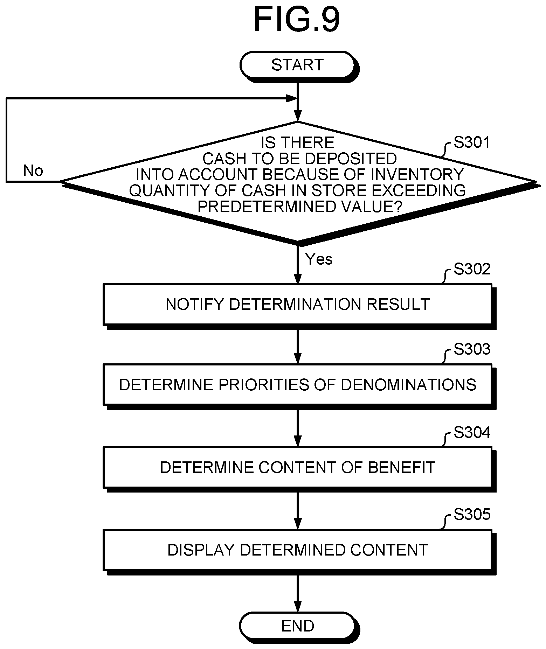

FIG. 9 is a flowchart showing a process flow along which the store server 300 displays benefit information on the display device 600. The store server 300 manages the inventory quantity, i.e., denominations and the quantity for each denomination, of cash currently stored in the cash handling apparatus 400.

According to the inventory quantity of cash in the cash handling apparatus 400, the store server 300 can specify denominations, the quantity for each denomination, and the total amount of cash that can be dispensed at the store for the user of the cash receiving system 1, and can notify the clerk of the same. The clerk can set, for each denomination, a threshold with which the store server 300 determines whether or not cash can be dispensed. The clerk can store the threshold as setting information in the store server 300. The clerk can set the threshold while designating an amount for each denomination, or can set the threshold while designating a quantity for each denomination. Examples of the clerk who operates the store server 300 for setting the thresholds include a manager and a person in charge of the store.

The store server 300 monitors whether or not the inventory quantity of cash in the cash handling apparatus 400 exceeds a predetermined amount (threshold) (step S301; No). If there is no denomination whose quantity (amount) in the cash handling apparatus 400 exceeds the threshold set in advance by the clerk, the store server 300 determines that the store does not have cash to be deposited in the bank account of the store, that is, the store cannot cope with dispensing of cash that is withdrawn from the bank account of the user of the cash receiving system 1. When there is a denomination whose quantity (amount) in the cash handling apparatus 400 exceeds the threshold, the store server 300 determines that the store has cash to be deposited in the bank account of the store, that is, the cash handling apparatus 400 can dispense cash to be withdrawn from the bank account of the user.

When the store has cash to be deposited in the bank account of the store (step S301; Yes), the store server 300 performs a notification process of notifying the clerk of the same (step S302). For example, the store server 300 uses the operation terminal 350 as a notification unit, and displays, on the screen of the operation terminal 350, information indicating that cash can be dispensed, from the cash handling apparatus 400, for a cash handing over transaction with the user. Meanwhile, for example, the store server 300 uses a smartphone (mobile terminal) possessed by the clerk as a notification unit, and displays the above information on the screen of the mobile terminal of the clerk. The clerk, based on the information displayed on the operation terminal 350 or the mobile terminal, recognizes that the store has cash to be deposited in the bank account of the store, that is, cash can be dispensed, from the cash handling apparatus 400, for the customer who withdraws cash from his/her bank account.

When there are a plurality of denominations that can be dispensed from the cash handling apparatus 400, the store server 300 compares the quantities of the respective denominations and determines priorities of denominations that the store wants the user to dispense from the cash handling apparatus 400 (step S303). A denomination, whose quantity stored in the cash handling apparatus 400 is larger, is given a higher priority. For example, if the store wants to dispense more 10,000-JPY notes from the cash handling apparatus 400 and reduce the number thereof, the store server 300 sets the highest priority on 10,000-JPY notes. If the store wants to reduce 5,000-JPY notes from the cash handling apparatus 400 next to the 10,000-JPY notes, for example, the store server 300 sets the second highest priority on 5,000-JPY notes.

The information on the dispensable cash thus obtained is registered in the store information and managed by the management server 100 as described above. The management server 100 can manage information on denominations and the quantity for each denomination of cash that can be dispensed from the cash handling apparatus 400 of the store. Thus, the management server 100 can receive, from the mobile terminal 200, information on the amount of cash that the user withdraws from his/her account, and search for stores capable of dispensing the cash. Moreover, the management server 100 can receive denominations and the quantity (amount) for each denomination designated by the user, and search for stores capable of dispensing cash as designated.

Subsequently, the store server 300 determines the content of benefit to be given to the user who has received cash at the store (step S304). The clerk of the store can set in advance what kind of benefit is to be given in what situation, and store this condition as setting information in the store server 300. For example, the clerk prepares the setting information such that the benefit is given to dispensing of the denomination having the highest priority. The store server 300 determines the content of benefit with reference to the setting information.

The store server 300 displays information on the determined denomination priorities and content of benefit, on the display device 600 installed at the checkout counter (step S305), and ends the process.

By preparing setting information in advance, the clerk can change the content of dispensing in a cash handing over transaction in which a benefit is given, and the content of benefit to be given to the user at completion of the transaction. The store server 300 changes the content of benefit, based on the setting information prepared by the clerk. For example, as shown in FIGS. 7A to 7C, the commission that the store receives from the management company may differ between when the user receives cash withdrawn from the account at the bank X and when the user receives cash withdrawn from the account at the bank Y. In this case, the clerk can set the benefit to be given to the user such that the benefit is changed between when the user who receives cash has the account at the bank X and when the user has the account at the bank Y.

The clerk can set the benefit to be given to the user such that the benefit is changed according to the amount of cash that the user receives. For example, the larger the amount of cash that the user has received at the store is, the better the benefit given to the user is. This provides the user with an incentive to perform dispensing.

The clerk can set the benefit to be given to the user such that the benefit is changed according to the denomination of cash that the user receives. For example, when 10,000-JPY notes are higher in priority than 5,000-JPY notes, a benefit for 10,000-JPY notes may be made more attractive than a benefit for 5,000-JPY notes. This provides the user with an incentive to dispense 10,000-JPY notes.

The store server 300 may not necessarily determine the content of benefit automatically based on the setting information prepared by the clerk in advance. The clerk may manually determine the content of benefit. For example, upon receiving the notification in step S302, the clerk, by operating the store server 300, may confirm the details of the inventory quantity of cash in the cash handling apparatus 400 and determine a denomination and an amount with which the user is given the benefit, and the content of benefit.

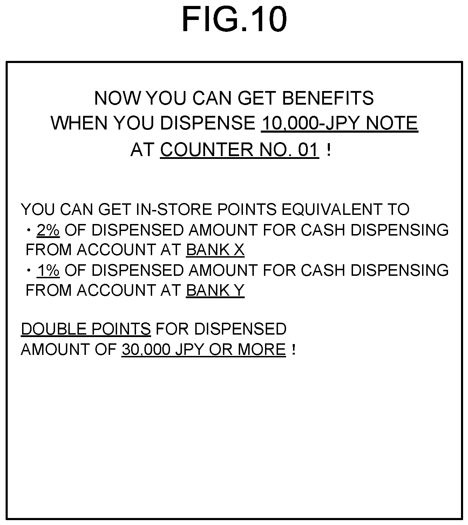

FIG. 10 shows an example of the benefit information displayed on the display device 600. The information displayed on the display device 600 may include: information on a place where the user can receive cash; information on a denomination and an amount with which the user having received the cash is given the benefit; and information on the content of benefit to be given.

When there are a plurality of checkout counters in the store, the store server 300, which has detected a cash handling apparatus 400 capable of dispensing cash in step S301 in FIG. 9, specifies a checkout counter at which this cash handling apparatus 400 is installed. The store server 300 displays information indicating the specified checkout counter on the display device 600. In the example shown in FIG. 10, since the cash handling apparatus 400 detected by the store server 300 is installed at the checkout counter of "Counter No. 01", information indicating this fact is displayed. Regarding the information indicating the place in the store, the store server 300 may automatically detect the place, or the clerk may manually designate the place by operating the store server 300.

In the example shown in FIG. 10, as for the denomination-based priority of cash that the store wants to dispense from the cash handling apparatus 400 and reduce the number thereof, the highest priority is given to 10,000-JPY notes. Therefore, information that gives the user an incentive to dispense 10,000-JPY notes is displayed. Moreover, since the commission that the store can obtain from the management company is higher when the user has an account at the bank X than when the user has an account at the bank Y, information indicating that the user having an account at the bank X can obtain a higher benefit than the user having an account at the bank Y, is displayed. In addition, information indicating that the user who has received cash not less than a predetermined amount can obtain a higher benefit than the user who has received cash less than the predetermined amount, is displayed.

Thus, the information on the benefit that the user can obtain at the store is displayed on the display device 600, whereby the user is given an incentive to perform the transaction of receiving, at the store, cash withdrawn from the bank account.

The information on the benefit may be displayed on a display device installed in a place other than the checkout counter. The information on the benefit may be informed to the users through e-mails, an SNS (Social Networking Service), an application of the mobile terminals 200, a website operated by the store, etc.

For example, the store server 300, which has determined that the store has cash to be deposited into the bank account of the store, transmits, to the management server 100, information including: the content of dispensing to be included in a cash handing over transaction in which the store gives a benefit to the user; and the content of the benefit to be given to the user at completion of the transaction including the dispensing content. For example, the management server 100 adds information for specifying the store to the information shown in FIG. 10, and transmits the information to the mobile terminal 200 of each user through an e-mail. For another example, the management server 100 informs the users of the information by means of posting through an SNS, disclosure on a website, or notification through an application. The user can display the notified information on the mobile terminal 200, and confirm the store and the content of dispensing by which the user can obtain the benefit, and the content of the benefit. The user, based on the information displayed on the mobile terminal 200, goes to the store and obtains the benefit by performing a transaction to receive the cash withdrawn from the bank account. The content of the benefit that the user receives is not limited to points available for payment of the price of items when the user purchases items at the store. For example, the benefit may be a coupon available in the store, or a small gift from the store.

In the present embodiment, the store server 300 manages the inventory quantity of cash in one cash handling apparatus 400. However, the store server 300 can manage the inventory quantities of cash in a plurality of cash handling apparatuses. For example, the store server 300 manages the inventory quantities of cash in a plurality of cash handling apparatuses installed in the store, and determines a denomination and an amount of cash that the user can dispense and receive from each cash handling apparatus, and the content of a benefit to be given to the user, according to the inventory quantity of cash stored in each cash handling apparatus. Moreover, for example, upon receiving an input of information on cash that the clerk manually manages in the store, the store server 300 may determine a denomination and an amount of cash that the user can receive at the store, and the content of a benefit to be given to the user, based on the inventory quantities of cash in one or more cash handling apparatuses and on the denomination and the amount of the cash that is manually managed in the store. For example, after the user has received cash dispensed from a cash handling apparatus in the store, the clerk replenishes the cash handling apparatus with the cash manually managed by the clerk.

In the present embodiment, FIGS. 7A to 7C show the case where the management server 100 manages the information on the bank account and the account balance of each user. However, the management server 100 may not necessarily manage the information on the bank account of each user, and may acquire the information through an inquiry to the bank server 500. In this case, the above-described functions and operations performed by the management server 100 can be realized by performing an inquiry to the bank server 500 according to need. Moreover, in the present embodiment, the management server 100 manages the dispensable amount of cash of each store. However, the management server 100 may not necessarily manage the dispensable amount, and may obtain it through an inquiry to the store server 300. In this case, the above-described functions and operations performed by the management server 100 can be realized by performing an inquiry to the store server 300 according to need.

In the present embodiment, the amount of the commission to be paid from each bank to the management company and the amount of the commission to be paid from the management company to each store are calculated by multiplying the amount that the user has received at the store by a predetermined commission rate. However, the commission determination method is not limited thereto. For example, the amount of commission to be paid from each bank to the management company may be fixed, and the fixed amount of commission may be paid to the management company for each transaction, regardless of the amount that the user has received at the store. Likewise, the amount of commission to be paid from the management company to each store may be fixed, and the fixed amount of commission may be paid to each store for each transaction, regardless of the amount that the user has received at the store.

The components of the cash receiving system 1 according to the present embodiment are conceptually functional components, and thus may not necessarily be physically limited thereto. For example, the cash handling apparatus 400 may implement a part or the entirety of the function and operation of the operation terminal 350. The operation terminal 350 may implement a part or the entirety of the function and operation of the store server 300, or the store server 300 may implement a part or the entirety of the function and operation of the operation terminal 350. The management server 100 may implement a part or the entirety of the function and operation of the store server 300, or the store server 300 may implement a part or the entirety of the function and operation of the management server 100. The management server 100 may implement a part or the entirety of the function and operation of the bank server 500, or the bank server 500 may implement a part or the entirety of the function and operation of the management server 100. That is, distributed or integrated forms of each device are not limited to the forms described above, and all or some of the forms may be distributed or integrated functionally or physically in any unit depending on various loads, use statuses, or the like.

As described above, the user of the cash receiving system 1 according to the present embodiment can receive cash withdrawn from his/her bank account, at a store without using an ATM. The cash received by the user at the store is returned to the store by depositing an amount of the cash into a bank account of the store. Thus, the store can deposit the cash present in the store, into the bank account of the store without carrying the cash to the bank. Moreover, the store can obtain a commission by providing the user with a cash handing over service on behalf of a financial institution. The bank can provide the user with a cash dispensing service without installing an ATM in the store. The bank can easily and inexpensively increase locations where the cash dispensing service is provided, as compared to the case of installing ATMs.

### INDUSTRIAL APPLICABILITY

As described above, the cash receiving system and the cash receiving method according to the present invention are useful for offering advantages not only to a financial institution and a user who withdraws cash from his/her account at the financial institution but also to a store at which the cash withdrawn from the account is passed to the user.

## Claims

1. A cash receiving system for a user to withdraw cash from an account at a financial institution and receive the cash at a store, the system comprising:
a cash handling apparatus installed in each of a plurality of stores;
a store server configured to manage cash stored in the cash handling apparatus;
a mobile terminal for the user to input information on the cash to be withdrawn from the account;
a management server configured to receive the information inputted to the mobile terminal, and transmit to the mobile terminal, information on a store at which the user can receive the cash; and
a server, of the financial institution, configured to receive information on the cash that the user has received from the cash handling apparatus of the store, and perform account handling for transferring an amount of the cash from the account of the user to an account of the store, wherein
the store server determines whether or not there is cash to be deposited into the account of the store, based on an inventory quantity of cash in the cash handling apparatus, and
when the store server has determined that there is cash to be deposited into the account of the store, the management server notifies the user of information based on a result of the determination.

2. The cash receiving system according to claim 1, wherein
the management server selects a store at which the user can receive the cash, from among stores, the store servers of which have determined that there is cash to be deposited into the accounts of the stores.

3. The cash receiving system according to claim 1 or 2, wherein
when the amount of the cash stored in the cash handling apparatus of the store exceeds an amount that is set in advance by the store, the store server determines that there is cash to be deposited into the account of the store.

4. The cash receiving system according to any one of claims 1 to 3, wherein
when a timing that is set in advance by the store has come, the store server determines that there is cash to be deposited into the account of the store.

5. The cash receiving system according to any one of claims 1 to 4, wherein
when the store server has received a predetermined manual operation performed by a clerk of the store, the store server determines that there is cash to be deposited into the account of the store.

6. The cash receiving system according to any one of claims 1 to 5, further comprising
a display device installed in the store, wherein
when the store server has determined that there is cash to be deposited into the account of the store, the store server displays, on the display device, incentive information that gives the user an incentive to dispense cash.

7. The cash receiving system according to any one of claims 1 to 6, wherein
when it has been determined that there is cash to be deposited into the account of the store, the management server transmits to the mobile terminal, incentive information that gives the user an incentive to dispense cash.

8. The cash receiving system according to claim 6 or 7, wherein
the incentive information includes information on a benefit that is given from the store to the user when the user has received, at the store, the cash withdrawn from the account.

9. The cash receiving system according to claim 8, wherein
the benefit is a point that is available for payment of a price at settlement of a transaction performed in the store.

10. The cash receiving system according to any one of claims 1 to 9, wherein
in the account handling in a case where the account of the user and the account of the store at which the user has received the cash are at a first financial institution, the server of the first financial institution transfers the amount of the cash from the account of the user to an account of a management company, and transfers the amount of the cash from the account of the management company to the account of the store, and
in the account handling in a case where the account of the user is at the first financial institution and the account of the store is at a second financial institution, the server of the first financial institution transfers the amount of the cash from the account of the user to the account of the management company at the first financial institution; and the server of the second financial institution transfers the amount of the cash from the account of the management company at the second financial institution to the account of the store.

11. The cash receiving system according to claim 10, wherein
in the account handling in a case where the account of the user is at the first financial institution and the account of the store is at the second financial institution, the server of the first financial institution performs a transfer process to transfer the amount of the cash from the account of the management company at the first financial institution to the account of the management company at the second financial institution.

12. The cash receiving system according to claim 11, wherein
the management server manages information on each transaction in which a user has received cash at a store, and
in the transfer process, amounts to be transferred from the account of the first financial institution to the account of the second financial institution for a plurality of transactions are transferred by one transfer of an amount obtained by summing up the amounts based on the information managed by the management server.

13. The cash receiving system according to claim 11 or 12, wherein
the management server manages information on each transaction in which a user has received cash at a store, and
in the transfer process, an amount to be transferred from the account of the first financial institution to the account of the second financial institution and an amount to be transferred from the account of the second financial institution to the account of the first financial institution are transferred by one transfer of an amount corresponding to a difference obtained by offsetting these amounts based on the information managed by the management server.

14. The cash receiving system according to any one of claims 11 to 13, wherein
the number of times the transfer process is performed in a day is set for each store.

15. The cash receiving system according to any one of claims 11 to 14, wherein
the number of times the transfer process is performed in a day is changed according to a condition that is set in advance.

16. The cash receiving system according to any one of claims 10 to 15, wherein
in the account handling, a commission to be paid from the financial institution to the management company is deposited into the account of the management company, and a commission to be paid from the management company to the store is transferred from the account of the management company to the account of the store.

17. The cash receiving system according to claim 16, wherein
the commission to be paid from the financial institution to the management company is set for each financial institution, and the commission to be paid from the management company to the store is set for each store.

18. The cash receiving system according to claim 16 or 17, wherein
the commission to be paid from the financial institution to the management company and the commission to be paid from the management company to the store are changed according to conditions that are set in advance.

19. The cash receiving system according to any one of claims 1 to 17, wherein
the cash handling apparatus performs depositing of payment and dispensing of change in settlement of a transaction performed at a checkout counter.

20. The cash receiving system according to claim 19, wherein
the checkout counter is a self-checkout counter.

21. The cash receiving system according to claim 19, wherein
the checkout counter is a semi-self-checkout counter.

22. A cash receiving method for a user to withdraw cash from an account at a financial institution and receive the cash at a store, the method comprising:
determining by a store server whether or not there is cash to be deposited into an account of the store, based on an inventory quantity of cash in a cash handling apparatus installed in the store;
notifying, from a management server to the user, of information based on a result of determination, when the store server has determined that there is cash to be deposited into the account of the store;
receiving to a mobile terminal, information on the cash that the user withdraws from the account;
receiving to the management server, information inputted to the mobile terminal, and transmitting to the mobile terminal, information on a store at which the user can receive the cash;
dispensing from the cash handling apparatus installed in the store, the cash to be received by the user; and
receiving to a server of the financial institution, information on the cash that the user has received at the store, and performing account handling by the server of the financial institution, for transferring an amount of the cash from the account of the user to the account of the store.
